# EUROPÄISCHE PATENTANMELDUNG

(11) **EP 4 382 329 A1**
(43) Veröffentlichungstag der Anmeldung: **12.06.2024**
(21) Anmeldenummer: 23214276.0
(22) Anmeldetag: 05.12.2023
(51) Int. Cl.: B60H 1/34, F24F 13/065, F24F 13/08

(54) **LUFTDÜSE**

(30) Priorität: 07.12.2022 AT 509312022
(71) Anmelder: Siemens Mobility Austria GmbH, 1210 Wien (AT)
(72) Erfinder: Windhager, Johannes, 8152 Södingberg (AT)
(74) Vertreter: Siemens Patent Attorneys

(57) **Zusammenfassung**

Luftdüse (1), umfassend einen Festteil (2), welcher zur Anordnung an einer Wand (6) ausgebildet ist und einen beweglichen Teil (3), welcher in seiner Montageposition in dem Festteil (2) drehbar gelagert ist, wobei der bewegliche Teil (3) mittels Schnapphaken (4) in formschlüssigen Eingriff mit dem Festteil (2) steht, wobei in dem beweglichen Teil (3) ein Stabilisierungsring (5) eingebracht ist, welcher bei einer manuellen Krafteinbringung in den beweglichen Teil (3) ein Lösen der Schnapphaken (4) des beweglichen Teils (3) verhindert.

## Beschreibung

### Technisches Gebiet

Die Erfindung betrifft eine Luftdüse.

### Stand der Technik

Luftdüsen werden unter anderem in Innenräumen von Fahrzeugen eingesetzt um Frischluft oder aufbereitete Luft, d.h. erwärmte oder gekühlte Luft dem Innenraum zuzuführen. Neben Düsen, die als einfache Austrittsöffnung gestaltet sind, sind regulierbare Düsen gebräuchlich. Bei diesen regulierbaren Luftdüsen ist meist ein Klappensystem vorgesehen, welches durch einen Benutzer manuell betätigbar ist, sodass die austretende Luft in eine bestimmte Richtung gelenkt werden kann. Typischerweise sind diese Luftdüsen aus einem fest anzuordnenden Teil (Festteil), welcher an einem luftführenden Kanal angeordnet ist, und einem beweglichen Teil, welcher das Klappensystem trägt, aufgebaut. Dabei ist im Allgemeinen der bewegliche Teil um eine Drehachse gegenüber dem fest anzuordnenden Teil verdrehbar, sodass in Zusammenarbeit mit dem Klappensystem die ausströmende Luft in beliebige Richtungen lenkbar ist. Solche Luftdüsen sind allgemein bekannt und ihre Bauteile werden in großen Stückzahlen durch kostengünstige Fertigungsverfahren wie Kunststoffspritzguß hergestellt. Kunststoffteile werden bei solchen Einsatzzwecken üblicherweise mit sogenannten Schnapphaken ausgestattet, welche einteilig mit dem Teil selbst hergestellt werden und welche Ausformungen umfassen, welche mittels der dem Kunststoff eigenen elastischen Eigenschaften in Ausnehmungen eingreifen und die Teile somit formschlüssig miteinander verbinden. Dabei ist auch der bewegliche Teil mit dem fest anzuordnenden Teil über eine solche Schnapphakenverbindung verbunden, jedoch ist diese, da der bewegliche Teil eben gegenüber dem fest anzuordnenden Teil beweglich (drehbar) sein muss, notwendigerweise mit Spiel behaftet. Im praktischen Einsatz hat sich gezeigt, dass der bewegliche Teil einer solchen Luftdüse unter Einsatz von Handkraft aus dem fest angeordneten Teil entnehmbar ist. Dies kann bei Lüftungsdüsen im privaten Umfeld akzeptiert werden, jedoch nicht beim Einsatz im gewerbsmäßigen Personentransport, insbesondere mit Massenverkehrsmitteln wie Schienenfahrzeugen. Eine solche beschädigte Luftdüse lässt Luft ungehindert ausströmen, was den Passagierkomfort beeinträchtigt und reduziert den Volumenstrom bei benachbarten, unbeschädigten Luftdüsen. Es ist möglich, solche Düsen wesentlich aufwendiger zu konstruieren, sodass beispielsweise der bewegliche Teil in einer bestimmten Führung in dem fest anzuordnenden Teil drehbar gelagert ist, was jedoch eine höhere Bauteilanzahl und einen komplizierteren Zusammenbau bewirken würde. Es ist aus dem Stand der Technik keine Möglichkeit bekannt, wie eine herkömmliche bewegliche Luftdüse gegen die Entnahme des beweglichen Teils gesichert werden kann.

### Darstellung der Erfindung

Der Erfindung liegt daher die Aufgabe zugrunde, eine Luftdüse in Hinsicht auf erhöhte Vandalismusbeständigkeit zu ertüchtigen, sodass ein Entfernen des beweglichen Teils der Luftdüse nur mehr schwer und unter Inkaufnahme einer Beschädigung der Luftdüse möglich ist. Dabei sollen herkömmliche Luftdüsen einsetzbar sein und jegliche Montagevorgänge sollen von außerhalb der Luftdüse und insbesondere von außerhalb eines Luftkanals, in welcher die Düse angeordnet ist, erfolgen können.

Die Aufgabe wird durch ein Luftdüse mit den Merkmalen des Anspruchs 1 und einem Stabilisierungsring nach Anspruch 9 gelöst. Vorteilhafte Ausgestaltungen sind Gegenstand untergeordneter Ansprüche.

Dem Grundgedanken der Erfindung nach wird eine Luftdüse beschrieben, welche einen Festteil, der zur Anordnung an einer Wand ausgebildet ist und einen beweglichen Teil, welcher in seiner Montageposition in dem Festteil drehbar gelagert ist, wobei der bewegliche Teil mittels Schnapphaken in formschlüssigen Eingriff mit dem Festteil steht, wobei in dem beweglichen Teil ein Stabilisierungsring eingebracht ist, welcher bei einer manuellen Krafteinbringung in den beweglichen Teil ein Lösen der Schnapphaken des beweglichen Teils verhindert.

Dadurch ist der Vorteil erzielbar, ein beschädigungsfreies Herauslösen des beweglichen Teils unter Einsatz manuell aufbringbarer Kraft verhindern zu können.

Erfindungsgemäß ist eine gebräuchliche Luftdüse, umfassend eine Festteil und einen in dem Festteil drehbar gelagerten beweglichen Teil durch das Einbringen eines Stabilisierungsrings in den beweglichen Teil vor dem Herauslösen des beweglichen Teils gesichert. Der Stabilisierungsring verhindert dabei ein zu leichtes Lösen der Schnapphaken, welche den beweglichen Teil in dem Festteil halten.

Wird manuell eine Kraft auf den beweglichen Teil aufgebracht, so verformt sich der bewegliche Teil sodass dadurch der Formschluss mit dem Festteil gelöst werden kann. Der Stabilisierungsring stabilisiert den beweglichen Teil und verhindert diese Verformung, sodass auch beim Aufbringen von Kraft auf den beweglichen Teil der Formschluss mit dem Festteil erhalten bleibt. Dies erfolgt bei Kräften, welche üblicherweise durch Personen eingebracht werden, welche nicht nur die Bedienung der Luftdüse durchführen, sondern eine darüberhinausgehende Krafteinwirkung ausüben.

Die Erfindung sieht vor, den Stabilisierungsring vor der Montage des beweglichen Teils in den beweglichen Teil einzubringen und zusammen mit dem beweglichen Teil an dem Festteil zu befestigen. Der Stabilisierungsring bewirkt dabei, dass das Einbringen in den Festteil nur mit erhöhtem Kraftaufwand erfolgen kann, da die Schnapphaken des beweglichen Teils durch den Stabilisierungsring gestützt sind.

Eine bevorzugte Ausführungsform der Erfindung sieht vor, den Festteil und den beweglichen Teil jeweils im Wesentlichen zylinderförmig auszuführen. Diese Bauform ist beim Einsatz in Fahrzeugen gebräuchlich und entsprechende Luftdüsen in großer Auswahl erhältlich.

Es ist insbesondere vorteilhaft, wenn der bewegliche Teil ein Klappensystem zur Bestimmung der Richtung eines ausströmenden Luftstroms umfasst. Dadurch kann die Luftdüse die aus ihr strömende Luft in jede vom Bediener gewünschte Raumrichtung lenken, wobei eine Drehung des beweglichen Teils um seine Längsachse die Richtung des Luftstroms und die Stellung des Klappensystems den Winkel des Luftstroms zur Montageebene bestimmt. Das Klappensystem kann so ausgebildet sein, dass es ein komplettes Verschließen der Luftdüse erlaubt.

Als Material für die Bauteile der Luftdüse ist vorteilhafterweise Kunststoff einzusetzen, wobei insbesondere Kunststoff mit Eignung zur Verarbeitung mittels Spritzgusses geeignet ist. Dadurch sind große Stückzahlen preisgünstig herstellbar. Dies trifft auch auf den Stabilisierungsring zu.

Eine besondere Eigenschaft der Erfindung besteht darin, dass sie es vermag, bestehende Luftdüsen zu verbessern und die Eigenschaft der erschwerten Entnahme des beweglichen Teils nachzurüsten. Da diese Forderung der Vandalismussicherung nur in bestimmten Bereichen, insbesondere öffentlicher Verkehrsmittel besteht, kann es wirtschaftlicher sein, den Stabilisierungsring mittels eines Verfahrens herzustellen, welches keiner großen Investitionen in Werkzeuge bedarf. Beispielsweise können Stabilisierungsringe in geringer Stückzahl auch spanend oder mittels 3D-Druck hergestellt werden.

In weiterer Fortbildung der Erfindung ist es vorteilhaft, den Stabilisierungsring mit Ausnehmungen auszustatten, welche in seiner Montageposition im Inneren des beweglichen Teils mit dem beweglichen Teil in Eingriff geraten und die Relativposition des Stabilisierungsrings in Bezug auf den beweglichen Teil vorgeben. Solcherart kann auf einfache Weise die exakte Montageposition des Stabilisierungsrings im inneren des beweglichen Teils definiert werden, sodass eine einfache und exakt wiederholbare Montage des Stabilisierungsrings gelingt. Insbesondere können dabei weitere Hilfsmittel wie spezielle Montagevorrichtungen entfallen, da die Montageposition des Stabilisierungsrings eindeutig durch das gegenseitige Eingreifen der genannten Bauteile definiert ist.

Somit ist es auch möglich, auf einfache Art eine Klebeverbindung zwischen dem Stabilisierungsring und dem beweglichen Teil herzustellen.

Anstelle oder zusätzlich zu einer Klebeverbindung kann auch eine formschlüssige Verbindung zwischen dem Stabilisierungsring und dem beweglichen Teil vorgesehen werden. Dabei sind geeignete Ausformungen und Ausnehmungen an den Bauteilen vorzusehen, in welche der Stabilisierungsring eingreift und formschlüssig gehalten wird.

Des weiteren beschreibt die Erfindung einen Stabilisierungsring für eine Luftdüse, welche einen Festteil, welcher zur Anordnung an einer Wand ausgebildet ist und einen beweglichen Teil, welcher in seiner Montageposition in dem Festteil drehbar gelagert ist umfasst, wobei der bewegliche Teil mittels Schnapphaken in formschlüssigen Eingriff mit dem Festteil steht, und wobei der Stabilisierungsring in den beweglichen Teil einbringbar ausgeführt ist, sodass bei einer manuellen Krafteinbringung in den beweglichen Teil ein Lösen der Schnapphaken des beweglichen Teils verhindert wird.

Als Wand ist dabei typischerweise eine Wand eines luftführenden Kanals anzusehen, aus welchem die Luftzuführung in die Luftdüse erfolgt.

### Kurzbeschreibung der Zeichnungen

Es zeigen beispielhaft:
- Fig.1: Luftdüse mit Stabilisierungsring.
- Fig.2: Luftdüse mit Stabilisierungsring und Ansatz.

### Ausführung der Erfindung

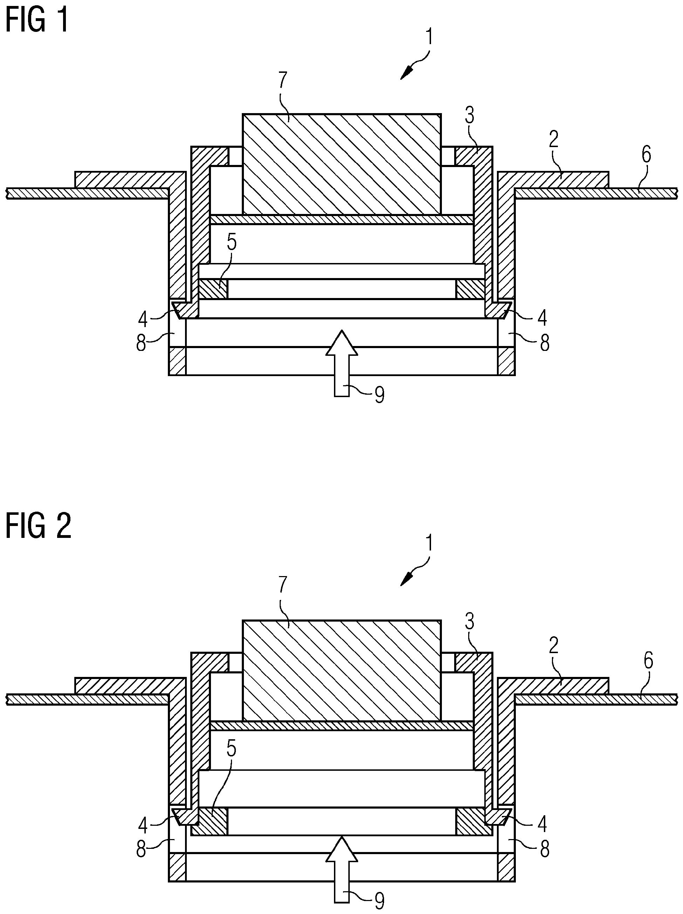

Fig.1 zeigt beispielhaft und schematisch eine Luftdüse. Es ist eine Luftdüse 1 in ihrer Einbauposition in einer Wand 6 eines Luftkanals dargestellt. Die Luftdüse 1 ist zur Führung eines Luftstroms 9 vorgesehen und umfasst einen Festteil 2. Der Festteil 2 ist im Wesentlichen zylindrisch geformt und mit Befestigungsmitteln zur Anordnung an der Wand 6 versehen. Ein beweglicher Teil 3 ist in den Festteil eingebracht, wobei der bewegliche Teil 3 um seine Längsachse drehbar ausgeführt ist. Dazu umfasst der bewegliche Teil 3 Schnapphaken 4, welche in seiner Montageposition in Ausnehmungen 8 des Festteils 2 eingreifen. Die Ausnehmungen 8 sind so gestaltet, dass ein Verdrehen des beweglichen Teils 3 gegen den Festteil möglich ist. Diese Ausnehmungen 8 können auch so gestaltet sein, dass eine Drehbarkeit des beweglichen Teils 3 um 360 Grad gegeben ist. In gezeigtem Ausführungsbeispiel ist der bewegliche Teil 3 mit einem Klappensystem 7 ausgestattet, welche eine Justierung des Ausströmwinkels der aus der Luftdüse 1 ausströmenden Luft ermöglicht. In das Innere des beweglichen Teils 3 ist ein Stabilisierungsring 5 eingebracht, welcher im Bereich der Schnapphaken 4 mit der Innenwand des beweglichen Teils 3 in Kontakt tritt und die Formstabilität des beweglichen Teils 3 bei einer manuellen Krafteinbringung in den beweglichen Teil 3, beispielsweise durch Verbiegen des Klappensystems 7 verhindert. Dadurch wird verhindert, dass die Schnapphaken 4 aus ihrem Eingriff in die Ausnehmungen 8 gelöst und somit der bewegliche Teil 3 entfernt werden kann. Die Positionierung des Stabilisierungsrings 5 an seiner Montageposition im Inneren des beweglichen Teils 3 kann durch eine solche Gestaltung des Stabilisierungsrings 5 vorgenommen werden, welche eine eindeutige und wiederholbare exakte Positionierung vorgibt, beispielsweise durch Ausnehmungen an dem Stabilisierungsring 5, welche zum Eingriff mit bestimmten Flächen des beweglichen Teils 3 ausgestaltet sind.

Fig.2 zeigt beispielhaft und schematisch eine Luftdüse mit einem Stabilisierungsring. Es ist die Luftdüse 1 aus Fig.1 dargestellt, wobei der Sicherungsring 5 mit einem Ansatz ausgestattet ist, welcher die Montageposition im Inneren des beweglichen Teils 3 exakt definiert und somit den Einbau erleichtert. Praktische Einsatzfälle einer Luftdüse sind oft in deckenseitigen Luftkanälen, wobei die Luftdüse um 180 Grad zu der in Fig.2 dargestellten Lage ist. Der Ansatz an dem Sicherungsring 5 verhindert dabei auch ein Herausfallen des Sicherungsrings 5 bei einem Versagen der Klebestelle mit dem beweglichen Teil 3.

### Liste der Bezeichnungen

- 1: Luftdüse
- 2: Festteil
- 3: Beweglicher Teil
- 4: Schnapphaken
- 5: Stabilisierungsring
- 6: Wand
- 7: Klappensystem
- 8: Ausnehmung
- 9: Luftstrom

## Patentansprüche

1. Luftdüse (1), umfassend einen Festteil (2), welcher zur Anordnung an einer Wand (6) ausgebildet ist und einen beweglichen Teil (3), welcher in seiner Montageposition in dem Festteil (2) drehbar gelagert ist, wobei der bewegliche Teil (3) mittels Schnapphaken (4) in formschlüssigen Eingriff mit dem Festteil (2) steht, **dadurch gekennzeichnet, dass**
in dem beweglichen Teil (3) ein Stabilisierungsring (5) eingebracht ist, welcher bei einer manuellen Krafteinbringung in den beweglichen Teil (3) ein Lösen der Schnapphaken (4) des beweglichen Teils (3) verhindert.

2. Luftdüse (1) nach Anspruch 1,
**dadurch gekennzeichnet, dass**
der Stabilisierungsring (5) vor der Montage des beweglichen Teils (3) in den beweglichen Teil (3) einbringbar ist und zusammen mit dem beweglichen Teil (3) bei der Montage in den Festteil (2) eingebracht werden kann.

3. Luftdüse (1) nach Anspruch 1 oder 2,
**dadurch gekennzeichnet, dass**
der Festteil (2) und der bewegliche Teil (3) jeweils im Wesentlichen zylinderförmig ausgeführt sind.

4. Luftdüse (1) nach einem der Ansprüche 1 bis 3,
**dadurch gekennzeichnet, dass**
der bewegliche Teil (3) ein Klappensystem (7) zur Bestimmung der Richtung eines ausströmenden Luftstroms umfasst.

5. Luftdüse (1) nach einem der Ansprüche 1 bis 4,
**dadurch gekennzeichnet, dass**
der bewegliche Teil (3), der Festteil (2) und der Stabilisierungsring (5) aus Kunststoff gefertigt sind.

6. Luftdüse (1) nach einem der Ansprüche 1 bis 5,
**dadurch gekennzeichnet, dass**
der Stabilisierungsring (5) Ausnehmungen aufweist, welche in seiner Montageposition im Inneren des beweglichen Teils (3) mit dem beweglichen Teil (3) in Eingriff geraten und die Relativposition des Stabilisierungsrings (5) in Bezug auf den beweglichen Teil (3) vorgeben.

7. Luftdüse (1) nach einem der Ansprüche 1 bis 6,
**dadurch gekennzeichnet, dass**
der Stabilisierungsring (5) in seiner Montageposition in dem beweglichen Teil (3) mit dem beweglichen Teil (3) mittels einer Klebeverbindung verbunden ist.

8. Luftdüse (1) nach einem der Ansprüche 1 bis 6,
**dadurch gekennzeichnet, dass**
der Stabilisierungsring (5) in seiner Montageposition in dem beweglichen Teil (3) mit dem beweglichen Teil (3) mittels einer formschlüssigen Verbindung verbunden ist.

9. Stabilisierungsring (5) für eine Luftdüse (1), welche einen Festteil (2), welcher zur Anordnung an einer Wand (6) ausgebildet ist und einen beweglichen Teil (3), welcher in seiner Montageposition in dem Festteil (2) drehbar gelagert ist umfasst, wobei der bewegliche Teil (3) mittels Schnapphaken (4) in formschlüssigen Eingriff mit dem Festteil (2) steht,
**dadurch gekennzeichnet, dass**
der Stabilisierungsring (5) in den beweglichen Teil (3) einbringbar ausgeführt ist, sodass bei einer manuellen Krafteinbringung in den beweglichen Teil (3) ein Lösen der Schnapphaken (4) des beweglichen Teils (3) verhindert wird.
